# EUROPÄISCHE PATENTSCHRIFT

(11) **EP 1 183 277 B1**
(45) Veröffentlichungstag und Bekanntmachung des Hinweises auf die Patenterteilung: **20.08.2003**
(21) Anmeldenummer: 00922606.9
(22) Anmeldetag: 05.04.2000
(51) Int. Cl.: C08B 31/16, C08B 13/00, C04B 24/16, C08B 37/00

(54) **SUBSTITUIERTE POLYSACCHARIDSULFATE, VERFAHREN ZUR HERSTELLUNG UND IHRE ANWENDUNG ALS HOCHLEISTUNGSFLIESSMITTEL FÜR ZEMENTMISCHUNGEN**
SUBSTITUTED POLYSACCHARIDE SULFATES, METHOD FOR PRODUCING THEM AND THEIR USE AS HIGH-PERFORMANCE FLOW AGENTS FOR CEMENT MIXTURES
POLYSACCHARIDE SULFATES SUBSTITUES, LEUR PROCEDE DE PRODUCTION ET LEUR UTILISATION COMME SOLVANTS PUISSANTS POUR DES MELANGES DE CIMENT

(30) Priorität: 07.05.1999 DE 19921175
(43) Veröffentlichungstag der Anmeldung: 06.03.2002
(73) Patentinhaber: Sika Technology AG, 6340 Baar (CH)
(72) Erfinder: STEINDL, Roman, A-3910 Stift Zwettl (AT); MÜLLER, Lothar, D-69234 Dielheim (DE)
(74) Vertreter: Grussdorf, Jürgen, Dr.
(86) Internationale Anmeldenummer: EP0003010
(87) Internationale Veröffentlichungsnummer: WO00068272

(56) Entgegenhaltungen:
- EP-A- 0 824 093
- WO-A-98/50320
- DE-A- 2 436 603
- FR-A- 2 236 513

## Beschreibung

Die Erfindung betrifft neuartige substituierte Polysaccharidsulfate Verfahren zur Herstellung und deren Anwendung als Hochleistungsfließmittel für Zementmischungen.

Die Anwendung sulfatierter Polysaccharide als Zusatzmittel für Zementmischungen ist in der DE 4407499 A1 genannt. Nach den Beispielen werden nur Celluloseether und Curdlan als Rohstoffe verwendet und mit milden Sulfatierungsmitteln sulfatiert. Die vorgeschlagenen Reaktionsbedingungen mit Dimethylsulfoxid als Lösungsmittel erlauben keine kostengünstige und großtechnische Herstellung der beschriebenen Produkte und sind nicht universell auf alle angeführten Polysaccharidrohstoffe anwendbar. Die vorgeschlagenen Produkte sind Verdickungsmittel, welche vorteilhaft in Mischung mit milden Dispergiermitteln zur Verbesserung der Betoneigenschaften eingesetzt werden können.

In der DE-AS 1132044 wird ein Polysaccharidsulfat, im speziellen ein Stärkesulfat, ein Verfahren zur Herstellung und die Verwendung als Verflüssigungsmittel für Zementmörtel beschrieben. Das Verfahren beruht auf der Verwendung von Formamid als Reaktionslösemittel und Chlorsulfonsäure oder Schwefeltrioxid als Sulfatierungsmittel. Mit den beschriebenen Herstellungsverfahren ist aber keine kostengünstige Herstellung eines Polysaccharidsulfates möglich, da das Reaktionslösungsmittel während der Reaktion und der nachfolgenden Aufarbeitung vollständig hydrolysiert wird und daher nicht rückgewinnbar ist. Die hergestellten Produkte sind reich an Chloridionen und fallen in der Ammoniumsalzform an. Bei der Anwendung in Zementmörteln werden deshalb erhebliche Ammoniakmengen freigesetzt. Der hohe Gehalt an Chloridionen verhindert den Einsatz als Fließmittel in vielen Zementmischungen nach den einschlägigen Normen.

In der WO 98/50320 werden Stärkesulfate als Zementfließmittel beschrieben, welche einen Schwefelgehalt von 6-12 % und ein Molgewicht von 3.000-50.000 aufweisen. Die Stärkesulfate werden aus löslicher Stärke, Formaldehyd und SO₃ hergestellt.

In der FR 2236513 werden Hydroxyethylstärkederivate als Plasmaexpander und Heparinersatz in der Pharmazie beschrieben. Diese Produkte haben ein Molgewicht von 1.000 bis 200.000 und 0,2 bis 1,2 Hydroxyethylgruppen pro Glucosegruppe sowie einen Schwefelgehalt von 2 bis 18 %. Diese Produkte sind in geringer Konzentration Verdickungsmittel, eine Verbesserung der Fließfähigkeit von Zementmischungen ist nicht beschrieben.

Im US Patent 2,896,715 wird die Anwendung von Stärkesulfaten bzw. deren Salze als Zusatzmittel für Zementmischungen beschrieben, mit spezieller Betonung der verzögernden Wirkung auf die Zementhydratation, was die Anwendung als Fließmittel von vornherein ausschließt.

Bisher bekannte Hochleistungsfließmittel (EP 0306449B1, EP 0619277A1, EP 0612702A1) basieren auf Copolymeren von Styrol und Maleinsäureanhydrid, die mit Polyethylenglycolen teilverestert sind.

Die bisher zu den Standardfließmitteln gerechneten Formaldehydkondensate mit Melamin- oder Naphthalinsulfonaten werden üblicherweise in deutlich höheren Einsatzmengen verwendet und sind biologisch nicht leicht abbaubar.

Es besteht daher der dringende Bedarf an Hochleistungsfließmitteln, die auf biologisch unbedenklichen Rohstoffen bzw. nachwachsenden Rohstoffen basieren, keine störenden Chloridionen enthalten, in ihrer Wirksamkeit optimiert sind und die auf kostengünstige Art herstellbar sind.

Unter Hochleistungsfließmittel werden im Sinn der Erfindung Zusatzmittel verstanden, die bei geringen Dosiermengen hohe dispergierende Wirkung auf Zementmischungen haben, die gegenüber den herkömmlichen Fließmitteln deutlich verlängerte Wirksamkeit haben, die die Hydratation nicht negativ beeinflussen, d.h. die Festigkeitsentwicklung nicht negativ beeinflussen, die keine korrosiv wirkenden Chloridionen enthalten und die Luftporengehalte der Zementmischungen nicht zusätzlich zum gewünschten Gehalt erhöhen.

Die erfindungsgemäßen Hochleistungsfließmittel sind aus Polysacchariden zugänglich, die in einem ersten Schritt durch die Einstellung der optimalen Molekulargewichtsverteilung, die vom eingesetzten Polysaccharid abhängt, durch Spaltung von z.B.: glycosidischen Bindungen hergestellt werden. Verfahren zur Spaltung von glycosidischen Bindungen sind dem Fachmann hinlänglich bekannt. Beispielsweise können folgende Verfahren verwendet werden: thermischer Abbau, oxidativer Abbau, enzymatischer Abbau oder säurehydrolytischer Abbau.

Bevorzugt werden zur Einstellung der für die Wirkung optimalen Molekulargewichtsverteilung säurehydrolytische Bedingungen eingesetzt, die nicht zur Lösung der Polysaccharide führen und keine Carboxylfunktionen generieren. Die Abbaureaktionen werden entweder in wäßrigem Milieu oder in teilwässrigem Milieu durchgeführt. Bevorzugt werden Reaktionsmedien, die aus Gemischen von Wasser und wassermischbaren organische Lösungsmitteln bestehen. Besonders bevorzugt werden Reaktionsmedien die entweder aus Gemischen von Wasser und wassermischbaren niedrigen Alkoholen mit 1 - 6 C-Atomen wie z.B.: Methanol, Ethanol, Propanol, iso-Propanol, Butanol usw. oder den reinen Alkoholen bestehen. Durch geeignete Wahl des Reaktionsmediums, des Katalysators und der Reaktionszeit ist für alle Polysaccharide die Möglichkeit gegeben, nicht nur das Ausmaß der Abbaureaktion zu steuern sondern auch die Verteilung der Molekulargewichte der Spaltprodukte einzustellen, so daß in weiterer Folge aus diesen Zwischenprodukten die erfindungsgemäßen Hochleistungsfließmittel herstellbar sind.

Für alle Polysaccharide gilt, daß die erfindungsgemäßen Hochleistungsfließmittel in den seltensten Fällen aus der nativen Form der Polysaccharide herstellbar sind, weil das durchschnittliche Molekulargewicht der Polysaccharide zu hoch liegt. Für die meisten Polysaccharide gilt ferner, daß ihre Zusammensetzung in der nativen Form nicht homogen ist oder das ihre Molekulargewichtsverteilung polymodal ist, d.h. mehrere Maxima aufweist.

Die Stärke aus zahlreichen Rohstoffen liegt bekannterweise in zwei Polymerarten vor, dem niedrigmolekulareren Amyloseanteil und dem hochmolekularen Amylopektinanteil.

Überraschenderweise wurde gefunden, daß das besonders bevorzugte Verfahren zur Einstellung der optimalen Molekulargewichtsverteilung in Wasser/Alkohol mit Mineralsäuren nicht nur zum Abbau der Molekülgrößen, sondern auch zu einer besonders homogenen Verteilung der Molekülgrößen führt. Daraus folgt, daß die hochmolulare Amylopektinfraktion deutlich stärker abgebaut wird als die Amylosefraktion. Es wird eine Molekulargewichtsverteilung erreicht, die besonders zur Herstellung der Hochleistungsfließmittel geeignet ist. Der größte Anteil der Molekülgrößen liegt dadurch in einem Bereich mit maximaler Fließmittelwirkung nach entsprechender Weiterbehandlung, wie unten beschrieben. Durch das besonders bevorzugte Abbauverfahren in Alkohol/Wasser mit Mineralsäuren werden kaum Anteile sehr niedrigmolekularer Fraktionen erhalten, wie das üblicherweise von anderen Abbauverfahren bekannt ist. Die niedrig molekularen Anteile wirken aber nach der erfindungsgemäßen Weiterbehandlung stark verzögernd auf die Hydratation der Zementgemische ein, führen also zu einer extremen Abnahme der Frühfestigkeiten.

Die erfindungsgemäßen Produkte fallen in einer Form bevorzugt mit mittlerem Molekulargewicht an, die die Frühfestigkeiten nicht negativ beeinflussen.

Andere bekannte Abbauprodukte von Polysacchariden, die ohne Rücksicht auf die hier genannten Erkenntnisse hergestellt wurden, weisen in den meisten Zementgemischen stark verzögernde Eigenschaften auf und können deshalb nicht als Hochleistungfließmittel verwendet werden, sondern kommen als Verzögerer oder als Verflüssiger mit deutlich verzögernder Wirkung zum Einsatz.

Aber auch die ausgeprägte Reduktion von zu hoch molekularen Anteilen ohne zu niedrig molekulare Anteile zu generieren, ist von wesentlicher Bedeutung für die Wirkung als Hochleistungsfließmittel. Zu hochmolekulare Anteile lagern sich zwar in gewünschter Weise an die Zementteilchen an und wirken dispergierend. Auf Grund des zu hohen Molekulargewichts entsteht aber gleichzeitig ein stark verdickender Effekt, der der gewünschten Konsistenzerniedrigung entgegenwirkt. in Summe wirken die zu hochmolekularen Anteile verdickend. Die Gesamtwirkung eines Hochleistungsfließmittel nimmt dadurch stark ab, da die verdickende Wirkung üblicherweise bei deutlich geringeren Dosiermengen eintritt, als sie für die Dosierung eines Hochleistungsfließmittels üblich sind.

Erfindungsgemäß werden z.B. native Polysaccharide mit Molgewichten von 100.000 bis 5 Mio. zunächst zu mittleren Kettenlängen mit Molgewichten von 5.000 bis 200.000, vorzugsweise 10.000 bis 150.000 und insbesondere 20.000 bis 120.000, abgebaut. Maximal 10 % der abgebauten Produkte sollen dabei ein Molekulargewicht von < 2.000 und > 200.000 aufweisen.

Zur Einstellung der sauren Reaktionsbedingungen bei der Polysaccharidspaltung können alle unter dem Begriff Lewis Säuren bekannten Stoffe eingesetzt werden. Bevorzugt werden Mineralsäuren als Katalysator verwendet. Besonders bevorzugt werden Mineralsäure wie z.B.: Schwefelsäure oder Salpetersäure verwendet, die keine der Fließmittelwirkung abträglichen Rückstände ergeben, deren Salze die Hydratation des Zementgemisches nicht negativ beeinflussen oder zur Korrosion von Bewehrungsstählen führen. Üblicherweise werden 0,1 bis 10, vorzugsweise 1 bis 5 Gew.-% Säure bezogen auf die Menge der Polysaccharide verwendet, bei Wasser oder wäßrigem Alkohol werden Reaktionszeiten von 0,1 bis 5 h, vorzugsweise 0,5 - 1 h und Reaktionstemperaturen von 20 °C bis zum Siedepunkt des Lösungsmittels verwendet. In Ausnahmefällen kann auch unter Druck gearbeitet werden, jedoch ist dies wegen des erhöhten apparativen Aufwandes nicht bevorzugt.

Unter Polysacchariden, die zur Herstellung der erfindungsgemäßen Produkte geeignet sind, werden die aus Monosacchariden aufgebauten Polymere verstanden, die aus mindestens 9 Monomereinheiten aufgebaut sind. Dazu zählen insbesondere die pflanzlichen und tierischen Gerüstsubstanzen wie z.B.: Cellulose oder deren Derivate, verschiedene Pflanzengummi wie z.B.: Galactomannane, oder pflanzliche Speicherkohlenhydrate wie z.B.: Stärken oder deren Derivate. Ebenso verwendbar sind Polysaccharide, die auf biotechnologischem Weg herstellbar sind wie z.B. Xanthane und Dextrane.

Bevorzugte Polysaccharidrohstoffe sind Stärken oder Stärkederivate. Stärke als Speicherkohlenhydrat kommt in einer Vielzahl an Pflanzen vor und wird mit den unterschiedlichsten Verfahren gewonnen.

Zu den verwendbaren Stärken zählen sowohl die Wurzel- oder Knollenstärken wie z.B.: Kartoffelstärke, amylosefreie Kartoffelstärke, Tapiokastärke als auch die Getreidestärken wie z.B.: Maisstärke, Wachsmaisstärke, hochamylosehaltige Maisstärke, Weizenstärke, Reisstärke usw. als auch diverse Stärken die aus Früchten gewonnen werden, wie z.B.: Erbsenstärke.

Die erfindungsgemäßen Hochleistungsfließmittel weisen dadurch eine sehr gut optimierte Wirkung auf.

### Die beiden folgenden Verfahrensweisen sind bevorzugt:

### Abbau in wäßriger Schwefelsäure

Die Stärke wird in entionisiertem Wasser suspendiert und mit der entsprechenden Menge 30%iger Schwefelsäure versetzt. Nach 24 Stunden Rühren bei 50 °C wird die Suspension mit der äquivalenten Menge Natriumhydroxid auf einen pH-Wert von 7 neutralisiert. Die depolymerisierte Stärke wird durch Filtration und Waschen gewonnen.

### Abbau in alkoholischer Schwefelsäure

Die Stärke wird in Methanol zu einer 50%igen Aufschlämmung suspendiert. Die Suspension wird unter Rühren auf 70°C erwärmt. Nach Zusatz der entsprechenden Menge Schwefelsäure wird die Stärkesuspension eine Stunde bei dieser Temperatur gerührt. Die modifizierte Stärke wird durch Filtration und Waschen gewonnen.

### Molekular-Gewichtsbestimmung mittels GPC Methode

### Anlage:

Pumpe Spectra Physics P100 Isocratic, Säulenofen Jetstream 2, Detektor RI Knauer K2300, Säulen Chrompack 300 GFC/Chrompack 4000 GFC/Guard GFC, Laufmittel 0,05 molare Natriumnitratlösung in Wasser, Fluß 1 ml/min, Probemenge 100 µl einer 0,5%igen Lösung im Eluenten, Kalibrierung auf Pullulan Standard Substanzen

### Probenbereitung:

Die Proben der depolymerisierten Polysaccharide wurden direkt im Eluenten in stark Verdünnung in Lösung gebracht und direkt ohne Zeitverlust verwendet.

in einem weiteren Reaktionsschritt werden die depolymerisierten Polysaccharide mit Reagentien umgesetzt, die Seitenketten in die Kohlenhydratpolymere einführen können, die zur Ausbildung von Wasserstoffbrückenbindungen zur Zementteilchenoberfläche fähig sind z.B.: Polyalkylenoxide oder Polyalkylenimine. Diese sollen etwa 5 bis 300, vorzugsweise 10 bis 50 Alkylenoxid- bzw. Alkylimingruppen und/oder als Endgruppe eine Hydroxyl- oder vorzugsweise eine Alkylgruppe mit 1 bis 20 C-Atomen aufweisen.

Reaktionsmechanismen, die zur Substitution von Polysacchariden mit Polyalkylenoxidseitenketten oder Alkylenimidseitenketten führen, sind dem Fachmann bekannt.

Entweder können Polyalkylenoxidseitenketten durch anionische Polymerisation der entsprechenden Epoxide wie z.B.: Ethylenoxid, Propylenoxid, Butylenoxid usw. unter entsprechender Kettenverlängerung der Polyalkylenoxidseitenkette oder durch Umsetzung von entsprechenden endgruppenfunktionellen Polyalkylenoxiden mit dem Polysaccharid eingeführt werden.

Geeignete endgruppenfunktionelle Polyalkylenoxide bzw. Polyalkylenimine sind vorzugsweise monofunktionell, bzw. difunktionell bei entsprechender Kettenlänge, oder monofunktionell bei gleichzeitig geschützten, weiteren Hydroxyl- bzw. Aminfunktionen. Besonders bevorzugt sind endgruppenfunktionelle Methoxy-polyalkylenoxide.

Geeignete Funktionalitäten sind beispielsweise Funktionalitäten die zu einer kovalenten Etherbindung, Esterbindung oder Acetalbindung führen. z.B.: Epoxyfunktionen bzw. Halohydrinfunktionen, Doppelbindungen, Acryl- oder Metacrylsäurefunktionen, Aldehydfunktionen, Anhydridfunktionen, Phosphatfunktionen.

Weitere geeignete basische Funktionalitäten führen zu einer salzartigen Bindung der Polyethylenglycolseitenketten entweder an die freien Hydroxylfunktionen der Polysaccharide oder im Fall der Umkehr der Reaktionsabfolge an die Sulfathalbester, die auf weiter unten beschriebenem Wege eingeführt werden.

Erfindungsgemäß werden so pro Saccharidmonomereinheit 0,01 bis 1, vorzugsweise 0,05 bis 0,2 Seitenketten eingeführt.

Die im zweiten Schritt hergestellten substituierten Abbauprodukte der Polysaccharide mit definierter Molekulargewichtsverteilung werden durch einen nachfolgenden Sulfatierungsschritt weiter umgesetzt.

Allgemeine Verfahren zur Einführung von Sulfatestern in Polysaccharide sind dem Fachmann hinlänglich bekannt. Die Polysaccharide werden in den meisten Fällen in einem Lösungsmittel suspendiert und mit Sulfatierungsmitteln umgesetzt. Verwendete Sulfatierungsmittel sind z.B.:Schwefelsäure, Chlorsulfonsäure, Schwefeltrioxid, Piperidinschwefelsäure bzw. deren Verbindungen mit Lewis Basen wie z.B.: Pyridin, Trimethylamin, Dimethylethylamin, Triethylamin, Dimethylanilin, Dioxan, oder andere Addukte von Schwefeltrioxid. Als Lösungsmittel kommen Toluol, Formamid, Dimethylformamid, Dimethylsulfoxid, Pyridin usw. zum Einsatz.

Zur Herstellung der erfindungsgemäßen Produkte werden bevorzugt Lösungsmittel verwendet, die selbst als Lewis Base bezeichnet werden können, wie z.B.: Formamid bzw. Dimethylformamid. Bevorzugt wird Dimethylformamid als Lösungsmittel und Schwefeltrioxid als Sulfatierungsmittel verwendet, wobei der weitere Zusatz von tert. Aminobasen vorteilhaft ist. Weiters bevorzugt sind Sulfatierungsmittel, die unter milden Bedingungen zur Einführung des Sulfatester geeignet sind. Durch die milden Reaktionsbedingungen läuft die Sulfatierungsreaktion unter leicht zu kontrollierenden Bedingungen ab und erlaubt die reproduzierbare und exakte Einhaltung der optimalen Molekulargewichtsverteilung, die zuvor durch den oben beschriebenen Abbau eingestellt worden ist, und die für die Wirkung als Hochleistungsfließmittel sehr entscheidend ist.

Auch unter so kontrollierten Bedingungen findet noch eine teilweise Spaltung der Saccharidkette statt, die jedoch bei Seitenkettensubstitution durch Polyalkylenoxid- oder Polyalkylenimingruppen erheblich geringer ist als bei unsubstituierten Sacchariden (vgl. DE 4407499 A1 und DE AS 1132044).

Die erfindungsgemäßen Produkte enthalten so 1 bis 16, vorzugsweise 5 bis 10 % Schwefel als Sulfatgruppen.

Überraschenderweise sind die substituierten Polysaccharide, die gemäß den oben beschriebenen Verfahrensstufen in ihrer Molekulargewichtsverteilung eingestellt worden sind, besonders gut in organischen Lösungsmitteln wie DMF löslich, die bisher nur mit erheblichem Aufwand zur Sulfatierung von Polysacchariden verwendet werden konnten. Für die nachfolgende Umsetzung mit einem geeigneten Sulfatierungsmittel zeigte sich die homogene Löslichkeit der abgebauten, substituierten Polysaccharide als sehr wesentlich, um die erfindungsgemäßen Hochleistungsfließmittel zu erhalten.

Polysaccharide, die nicht in homogener Lösung umgesetzt worden waren, haben bei weitem nicht die Wirksamkeit der erfindungsgemäßen Produkte.

In weiterer Folge zeigte sich, daß diese depolymerisierten, substituierten Polysaccharide in besonders glatter und vollständiger Weise zu sulfatierten Produkten mit außergewöhnlich hoher Reaktionseffizienz bei sehr hohen Sulfatierungsgraden umgesetzt werden können. In weiterer Folge können die erfindungsgemäßen Produkte daher besonders kostengünstig hergestellt werden.

Durch die Einführung der erfindungsgemäßen Polyglycol- oder Polyalkyliminseitenketten wird die verflüssigende Wirkung der bekannten Polysaccharidsulfate deutlich erhöht. Gleichzeitig wird der Zeitraum, in der die dipergierende bzw. verflüssigende Wirkung anhält deutlich verlängert. Dieser Effekt wird durch geeignete Auswahl entsprechender Seitenketten erreicht.

Die erfindungsgemäßen Hochleistungsfließmittel werden zusammenfassend auf folgende Weise beschrieben:

Die auf geeignete Weise in ihrem Molekulargewicht eingestellten Polysaccharide werden mit Polyalkylenoxid - oder Polyalkyleniminseitenketten substituiert und vorzugsweise mit Schwefeltrioxid unter Anwesenheit von weiteren tert. Aminobasen sulfatiert. Dabei kann die Reihung der Einzelschritte auch umgekehrt sein oder alle Teilschritte direkt hintereinander oder gleichzeitig durchgeführt werden.

Die erfindungsgemäßen Produkte können aus dem Reaktionsgemisch über bekannte Aufarbeitungsverfahren entweder direkt in trockener Form oder als wässrige Lösung gewonnen werden. Die eingesetzten Lösungsmittel und Reaktionshilfsstoffe werden dabei nahezu vollständig rückgewonnen. Das Herstellungsverfahren wird auch durch die hohen Rückgewinnungsraten bei geeigneter Wahl der Reaktionslösungsmittel sehr kostengünstig.

Die erfindungsgemäßen Hochleistungsfließmittel können entweder in ihrer trockenen Form als Pulver oder als wäßrige Lösung verwendet werden, wobei deren Konzentration je nach Einsatzbereich variieren kann. Die wäßrigen Lösungen der erfindungsgemäßen Hochleistungsfließmittel weisen eine Viskosität auf, die auch die Herstellung und Anwendung hochkonzentrierter Lösungen erlaubt.

Die erfindungsgemäßen Produkte können für alle Zementmischungen angewendet werden und zwar für Beton, Gießmörtel, Mörtel, Estrichformulierungen, Zementpasten usw.

Die notwendigen Einsatzmengen richten sich nach der gewünschten Konsistenz bei gleichzeitig gewünschter Reduktion der notwendigen Anmachwassermenge. Übliche Anwendungsmengen liegen im Bereich von 0,01 bis 5 % Wirksubstanz bezogen auf den Zementanteil der Mischung. In allen Fällen wird aber maximal die gleiche Einsatzmenge im Vergleich zu den herkömmlichen Standardfließmitteln, die auf sulfonierten Naphthalin- oder Melaminformaldehydkondensaten aufbauen, eingesetzt. In den meisten Fällen liegt die notwendige Einsatzmenge aber deutlich darunter. Der Zeitraum der verflüssigenden Wirkung ist üblicherweise deutlich verlängert und kann bis zu mehreren Stunden anhalten, ohne dabei die Abbindezeit zu verlängern.

Die erfindungsgemäßen Hochleistungsfließmittel sind in ihrer trockenen oder flüssigen Form beliebig mit anderen bekannten, in der Zementtechnologie gebräuchliche Zusatzmitteln kombinierbar.

### Beispiele

### A) Einstellung der Molekulargewichtsverteilung

### Beispiel 1

250 g Kartoffelstärke werden in 250 ml Methanol suspendiert und unter Rühren auf 70 °C erwärmt. Nach Zugabe von 0,5 Gew.% Schwefelsäure bezogen auf die Einwaage an Kartoffelstärke wurde eine Stunde gerührt. Nach Ablauf der Reaktionszeit wird die depolymerisierte Stärke abfiltriert und mit Methanol neutral gewaschen.
Mittleres Molekulargewicht 131150, 10% > 360000, 90% >8500

### Beispiel 2

250 g Kartoffelstärke werden in 250 ml Methanol suspendiert und unter Rühren auf 70 °C erwärmt. Nach Zugabe von 2 Gew% Schwefelsäure bezogen auf die Einwaage an Kartoffelstärke wurde eine Stunde gerührt. Nach Ablauf der Reaktionszeit wird die depolymerisierte Stärke abfiltriert und mit Methanol neutral gewaschen.
Mittleres Molekulargewicht 90700, 10% > 272500, 90% >3600

### Beispiel 3

250 g Kartoffelstärke werden in 250 ml Methanol suspendiert und unter Rühren auf 70 °C erwärmt. Nach Zugabe von 3 Gew% Schwefelsäure bezogen auf die Einwaage an Kartoffelstärke wurde eine Stunde gerührt. Nach Ablauf der Reaktionszeit wird die depolymerisierte Stärke abfiltriert und mit Methanol neutral gewaschen.
Mittleres Molekulargewicht 59400, 10% > 142500, 90% >2760

### Beispiel 4

250 g Kartoffelstärke werden in 250 ml Methanol suspendiert und unter Rühren auf 70 °C erwärmt. Nach Zugabe von 4 Gew% Schwefelsäure bezogen auf die Einwaage an Kartoffelstärke wurde eine Stunde gerührt. Nach Ablauf der Reaktionszeit wird die depolymerisierte Stärke abfiltriert und mit Methanol neutral gewaschen.
Mittleres Molekulargewicht 49200, 10% > 111500, 90% >2430

### Beispiel 5

250 g Kartoffelstärke werden in 250 ml Methanol suspendiert und unter Rühren auf 70 °C erwärmt. Nach Zugabe von 5 Gew% Schwefelsäure bezogen auf die Einwaage an Kartoffelstärke wurde eine Stunde gerührt. Nach Ablauf der Reaktionszeit wird die depolymerisierte Stärke abfiltriert und mit Methanol neutral gewaschen.
Mittleres Molekulargewicht 24350, 10% > 60650, 90% >1830

### Beispiel 6

250 g Kartoffelstärke werden in 250 ml Methanol suspendiert und unter Rühren auf 70 °C erwärmt. Nach Zugabe von 10 Gew% Schwefelsäure bezogen auf die Einwaage an Kartoffelstärke wurde eine Stunde gerührt. Nach Ablauf der Reaktionszeit wird die depolymerisierte Stärke abfiltriert und mit Methanol neutral gewaschen.
Mittleres Molekulargewicht 6850, 10% > 16090, 90% >1170

### B) Einführung von Polyalkyleneoxidsubstituenten

### Beispiel 7

105,3 g abgebaute Kartoffelstärke mit einer Restfeuchte von 5 % laut Beispiel 3 werden in 300 ml Toluol suspendiert. Zu der Suspension werden 127,7 g eines Methoxypolyethylenglycolglycidylethers mit einem Epoxidäquivalentgewicht von 1038 g/ Äquivalent zugesetzt. Die Reaktionsmischung wird auf 90°C erhitzt und 5,9 Gramm oder 1,2 Äquivalente Natriumhydroxid bezogen auf die des Methoxypolyethylenglycolglycidylethers zugesetzt. Die Reaktionstemperatur wird auf 110°C erhöht und 24 Stunden bei dieser Temperatur gehalten.

Nach Ablauf der Reaktionszeit wird das Reaktionsgemisch auf Raumtemperatur abgekühlt und mit 500 ml Toluol aufgenommen.

Das Reaktionsprodukt wird durch Zugabe in das vierfache Volumen Petrolether gefällt und mit Petrolether und Aceton gewaschen.

Der durchschnittliche Substitutionsgrad des Produktes bezüglich der Polyethylenglycolgruppen wurde mittels Zeisel'scher Etherspaltung und GC Analyse der Spaltprodukte mit DS =0,12 bestimmt.

Das durchschnittliche Molekulargewicht des Produktes wurde mittels GPC Analyse ermittelt und beträgt 104000.

### Beispiel 8

105,3 g abgebaute Kartoffelstärke mit einer Restfeuchte von 5 % laut Beispiel 3 werden in 300 ml Toluol suspendiert. Zu der Suspension werden 316,2 g eines Methoxypolyethylenglycolglycidylethers mit einem Epoxidäquivalentgewicht von 2550 g/ Äquivalent zugesetzt. Die Reaktionsmischung wird auf 90°C erhitzt und 5,9 Gramm oder 1,2 Äquivalente Natriumhydoxid bezogen auf die Epoxyäquivalente des Methoxypolyethylenglycolglycidylethers zugesetzt. Die Reaktionstemperatur wird auf 110°C erhöht und 24 Stunden bei dieser Temperatur gehalten.

Nach Ablauf der Reaktionszeit wird das Reaktionsgemisch auf Raumtemperatur abgekühlt und mit 500 ml Toluol aufgenommen.

Das Reaktionsprodukt wird durch Zugabe in das vierfache Volumen Petrolether gefällt und mit Petrolether und Aceton gewaschen.

Der durchschnittliche Substitutionsgrad des Produktes bezüglich der Polyethylenglycolgruppen wurde mittels Zeisel'scher Etherspaltung und GC Analyse der Spaltprodukte mit DS =0,11 bestimmt.
Das durchschnittliche Molekulargewicht des Produktes wurde mittels GPC Analyse ermittelt und beträgt 159000.

### Beispiel 9

103,5 g Kartoffelstärke mit einer Restfeuchte von 4,5 % laut Beispiel 4 werden laut Beispiel 7 umgesetzt.

Der durchschnittliche Substitutionsgrad des Produktes bezüglich der Polyethylenglycolgruppen wurde mittels Zeisel'scher Etherspaltung und GC Analyse der Spaltprodukte mit DS =0,12 bestimmt.

Das durchschnittliche Molekulargewicht des Produktes wurde mittels GPC Analyse ermittelt und beträgt 92400.

### Beispiel 10

103,5 g Kartoffelstärke mit einer Restfeuchte von 4,5 % laut Beispiel 4 werden laut Beispiel 8 umgesetzt.

Der durchschnittliche Substitutionsgrad des Produktes bezüglich der Polyethylenglycolgruppen wurde mittels Zeisel'scher Etherspaltung und GC Analyse der Spaltprodukte mit DS =0,11 bestimmt.

Das durchschnittliche Molekulargewicht des Produktes wurde mittels GPC Analyse ermittelt und beträgt 149500.

### C) Sulfatierung

### Beispiel 11

522 g Kartoffelstärke mit einer Restfeuchte von 95,8 % laut Beispiel 4 werden in 1000 ml Dimethylformamid eingerührt, eine Stunde bei 90°C gerührt und unter Rühren auf 40°C abgekühlt. Nach Zugabe von 750 g eines Adduktes von Dimethylformamid/Schwefeltrioxid und 580 g Triethylamin wird das Reaktionsgemisch auf 90°C erwärmt und vier Stunden bei dieser Temperatur gehalten. Nach Abkühlen auf 20°C werden 1500 g einer wäßrigen Lösung von 300 g Natriumhydroxid in Wasser zugesetzt.

Das Produkt wird durch Einrühren des Reaktionsgemisches in 15 Liter Methanol gefällt. Der Niederschiag wird filtriert und in 80%igem wäßrigem Methanol aufgenommen. Nach nochmaligem Filtrieren, Waschen mit 500 ml Methanol und Trocknen werden 930 g sulfatiertes Produkt mit einem gebundenen Schwefelgehalt von 14,1% erhalten.

Das durchschnittliche Molekulargewicht des Produktes liegt nach GPC Analysen referenziert auf sulfonierte Polystyrolstandards bei 12500.

### Beispiel 12

Das Reaktionsprodukt aus Beispiel 7 wird nach Verfahren laut Beispiel 11 mit 430 g Dimethylformamid/Schwefeltrioxid und 330 g Triethylamin umgesetzt. Es wird ein Produkt mit einem gebundenen Schwefelgehalt von 7,8 % erhalten. Das durchschnittliche Molekulargewicht des Produktes liegt nach GPC Analysen referenziert auf sulfonierte Polystyrolstandards bei 57600.

### Beispiel 13

Das Reaktionsprodukt aus Beispiel 8 wird nach Verfahren laut Beispiel 11 mit 277 g Dimethylformamid/Schwefeltrioxid und 215 g Triethylamin umgesetzt. Es wird ein Produkt mit einem gebundenen Schwefelgehalt von 5,3 % erhalten. Das durchschnittliche Molekulargewicht des Produktes liegt nach GPC Analysen referenziert auf sulfonierte Polystyrolstandards bei 117000.

### Beispiel 14

Das Reaktionsprodukt aus Beispiel 9 wird nach Verfahren laut Beispiel 11 mit 430 g Dimethylformamid/Schwefeltrioxid und 330 g Triethylamin umgesetzt. Es wird ein Produkt mit einem gebundenen Schwefelgehalt von 7,7 % erhalten. Das durchschnittliche Molekulargewicht des Produktes liegt nach GPC Analysen referenziert auf sulfonierte Polystyrolstandards bei 49400.

### Beispiel 15

Das Reaktionsprodukt aus Beispiel 10 wird nach Verfahren laut Beispiel 11 mit 277 g Dimethylformamid/Schwefeltrioxid und 215 g Triethylamin umgesetzt. Es wird ein Produkt mit einem gebundenen Schwefelgehalt von 5,1 % erhalten. Das durchschnittliche Molekulargewicht des Produktes liegt nach GPC Analysen referenziert auf sulfonierte Polystyrolstandards bei 98500.

### Beispiel 16

### Fließverhalten von Beton mit erfindungsgemäßen Mitteln

Das Fließverhalten von Beton mit den erfindungsgemäßen Mitteln im Vergleich zu Betonmischungen ohne Fließmittel und einem Standardfließmitel auf Naphthalinsulfonatbasis sowie einem Saccharidsulfonat ohne Seitenketten wurde gemäß DIN-Norm 1048 getestet. Die eingesetzten Produkte und Ergebnisse sind in den folgenden Tabellen wiedergegeben. Es zeigt sich, daß trotz Einsatzes geringerer Mengen die erfindungsgemäßen Mittel eine länger anhaltende Fließförderung aufweisen, wie sich aus dem langsameren Abfall der Ausbreitung mit der Zeit ergibt.

Die Ausbreitung wird gemäß DIN 1048, Teil 1, S. 3, Nr. 3.2.1. bestimmt, indem man einen Prüfkegelstumpf (Höhe 200 mm, unterer Durchmesser 200 mm, oberer Durchmesser 130 mm), der auf einem ebenen Tisch aus Sperrholz ruht, zu den Prüfzeiten 15 mal innerhalb von 15 Sekunden mit der Platte um 40 mm (Anschlag) anhebt und im freien Fall auf den Unterlagerahmen zurückfallen läßt. Die Ausbreitung des Kegels wird gegen die Tischränder gemessen.

### Betontechnische Daten:

| Bezeichnung | Beispiel |
|---|---|
| FMS | Standardfließmittel auf Basis Naphthalinsulfonat |
| FM1 | Beispiel 11 (Vergleich) |
| FM2 | Beispiel 12 |
| FM3 | Beispiel 13 |
| FM4 | Beispiel 14 |
| FM5 | Beispiel 15 |
| oFM | ohne Fließmittel |

### Die Prüfung der Produkte erfolgte in folgendem Betonsystem:

| | |
|---|---|
| Zement der Type 32,5R | 304 |
| Sand 0/2 mm | 685 |
| Kies 2/8 mm | 266 |
| Kies 8/16 mm | 362 |
| Kies 16/32 mm | 589 |
| Wasser | 176 |
| w/z-Wert | 0,58 |

### Ergebnisse:

| **Fließmittel** | **FMS** | **FM1** | **FM2** | **FM3** | **FM4** | **FM5** | **oFM** |
|---|---|---|---|---|---|---|---|
| Einsatzmenge in % v. ZG | 0,9 | 1,0 | 0,45 | 0,41 | 0,44 | 0,40 | |

| **Ausbreitmaß** | Norm DIN 1048 | | | | | | |
|---|---|---|---|---|---|---|---|
| 5 min (o. FM) | 420 | 420 | 420 | 420 | 420 | 420 | 420 |
| 10 min (m. FM) | 570 | 580 | 580 | 570 | 580 | 570 | 415 |
| 30 min | 500 | 540 | 580 | 570 | 580 | 570 | 390 |
| 45 min | 490 | 540 | 580 | 570 | 580 | 570 | 365 |
| 60 min | 460 | 510 | 570 | 560 | 570 | 570 | 360 |
| Rohdichte in kg/dm³ | 2,38 | 2,39 | 2,38 | 2,37 | 2,39 | 2,38 | 2,38 |

| **Druckfestigkeiten** | Norm DIN 1048 | | | | | | |
|---|---|---|---|---|---|---|---|
| 24 Stunden in N/mm² | 12 | 8,6 | 12 | 13 | 12 | 12 | 12,4 |

## Patentansprüche

1. Substituierte Polysaccharidsulfate als Hochleistungsfließmittel für Zementmischungen, bestehend aus
a) einer Polysaccharidkette mit einem durchschnittlichen Molekulargewicht von 5.000 bis 200.000, welche
b) 1 bis 16 % Schwefel in Form von Sulfatestergruppen und
c) bezogen auf die Saccharideinheit 0,01 bis 1 Seitenketten in Form von Polyalkylenoxid- und/oder Polyalkylenimingruppen aufweist, wobei
d) die Polyalkylenoxid- bzw. Polyalkylenimingruppen im Mittel 5 bis 300 Alkylenoxid- bzw. Alkylenimingruppen enthalten und
e) die Polyalkylenoxidgruppen, eine Hydroxy- oder Methoxyendgruppe und die Polyalkylenimingruppen eine Amino- oder Alkylaminoendgruppe mit 1-20 C-Atomen aufweisen.

2. Polysaccharidsulfat gemäß Anspruch 1, **dadurch gekennzeichnet, daß** die Polysaccharidkette ein Molekulargewicht von 10.000 bis 150.000, insbesondere von 20.000 bis 120.000 aufweist.

3. Polysaccharidsulfat gemäß Anspruch 1 oder 2, **dadurch gekennzeichnet, daß** der Sulfatgehalt 5 bis 10 % beträgt.

4. Polysaccharidsulfat gemäß einem der Ansprüche 1 bis 3, **dadurch gekennzeichnet, daß** der Substitutionsgrad der Polyalkylenoxid- bzw. Polyalkyleniminseitenketten 0,05 bis 0,2 beträgt.

5. Polysaccharidsulfat gemäß einem der Ansprüche 1 bis 4, **dadurch gekennzeichnet, daß** die Polyalkylenoxid- bzw. Polyalkyleniminseitenketten einen Polymerisationsgrad von 10 bis 50 aufweisen.

6. Polysaccharidsulfat gemäß einem der Ansprüche 1 bis 5, **dadurch gekennzeichnet, daß** maximal 10 % der Polysaccharide ein Molekulargewicht von < 2.000 oder > 200.000 aufweisen.

7. Verfahren zur Herstellung von Polysaccharidsulfate gemäß einem der Ansprüche 1 bis 6, **dadurch gekennzeichnet, daß** man
a) ein natives Polysaccharid in an sich bekannter Weise in ein Polysaccharid mit einem mittleren Molekulargewicht von 20.000 bis 200.000 abbaut,
b) das Polysaccharid mit einer Polyalkylenoxid- oder Polyalkyleniminverbindung substituiert und
c) das Polysaccharid in an sich bekannter Weise sulfatiert, wobei die Stufen a) und b) auch in ihrer Reihenfolge vertauscht werden können.

8. Verfahren gemäß Anspruch 7, **dadurch gekennzeichnet, daß** der Abbau der nativen Polysaccharide durch milde Säurehydrolyse in wässriger oder wässrig-alkoholischer Lösung mit einer Mineralsäure, vorzugsweise Schwefelsäure oder Salpetersäure, erfolgt.

9. Verfahren gemäß Anspruch 7 oder 8, **dadurch gekennzeichnet, daß** die Polyglycol- oder Polyalkyliminseitenketten durch anionische Polymerisation über entsprechende Epoxide aufgebaut werden oder entsprechend aktivierte Polyalkylenoxide oder Polyalkylenimine ankondensiert werden, oder eine aktivierte Säure-, Aldehyd-, oder Vinylgruppe aufweisen, welche mit einer OH-Gruppe des Polysaccharids reagieren kann.

10. Verfahren gemäß einem der Ansprüche 7 bis 9, **dadurch gekennzeichnet, daß** die Sulfatestergruppen mittels geeigneter Sulfatierungsmittel wie Schwefelsäure, Chlorsulfonsäure, Schwefeltrioxid, Piperidinschwefelsäure, in Gegenwart von Lewis Basen wie Pyridin, Triethylamin, Dimethylethylenamin, Triethylamin, Dimethylanilin oder Addukten dieser Lewis Basen mit Schwefeltrioxid eingeführt werden.

11. Verfahren gemäß Anspruch 10, **dadurch gekennzeichnet, daß** die Umsetzung in einem inerten Lösungsmittel, insbesondere Toluol, Formamid, Dimethylformamid, Dimethylsulfoxid, Pyridin oder deren Gemischen durchgeführt wird.

12. Verwendung von Polysaccharidsulfaten gemäß Anspruch 1 bis 7 als Hochleistungsfließmittel für Zementmischungen, **dadurch gekennzeichnet, daß** diese Mittel der Zementmischung in einer Menge von 0,1 bis 5 % bezogen auf den Zementanteil zugesetzt werden, bevorzugt 0,3 bis 1 %.

## Claims

1. Substituted polyaccharide sulphates as high preformance flow agents for cement mixtures, consisting of
a) a polysaccharide chain with an average molecular weight of 5000 to 200,000 which has
b) 1 to 16% sulphur in the form of sulphate ester groups and
c) referred to the saccharide unit,. has 0.01 to 1 side chains in the form of polyalkylene oxide and/or polyalkylene imine groups, whereby
d) the polyalkylene oxide or polyalkylene imine groups contain, on average, 5 to 300 alkylene oxide or alkylene imine groups and
e) the polyalkylene oxide groups have a hydroxyl or methoxy end group and the polyalkylene imine groups have an amino or alkylamino end group with 1 - 20 C-atoms.

2. Polysaccharide sulphate according to claim 1, **characterised in that** the polysaccharide chain has a molecular weight of 10,000 to 150,000, especially of 20,000 to 120,000.

3. Polysaccharide sulphate according to claim 1 or 2, **characterised in that** the sulphate content amounts to 5 to 10.

4. Polysaccharide sulphate according to one of claims 1 to 5, **characterised in that** the degree of substitution of the polyalkylene oxide or polyalkylene imine side chains amounts to 0.05 to 0.2.

5. Polysaccharide sulphate according to one of claims 1 to 4, **characterised in that** the polyalkylene oxide or polyalkylene imine side chains have a degree of polymerisation of 10 to 50.

6. Polysaccharide sulphate according to one of claims 1 to 5, **characterised in that** a maximum of 10% of the polysaccharides has. a molecular weight of <2000 or >200,000.

7. Process for the production of polysaccharide sulphates according to one of claims 1 to 6, **characterised in that** one
a) breaks down a native polysaccharide in per se known manner into a polysaccharide with an average molecular weight of 20,000 to 200,000,
b) substitutes the polysaccharide with a polyalkylene oxide or polyalkylene imine compounds and
c) sulphates the polysaccharide in per se known manner, whereby the steps a) and b) can also be changed in their sequence.

8. Process according to claim 7, **characterised in that** the breakdown of the native polysaccharides takes place by mild acid hydrolysis in aqueous or aqueous alcoholic solution with a mineral acid, preferably sulphuric acid or nitric acid.

9. Process according to claim 7 or 8, **characterised in that** the polyglycol or polyalkylimine side chains are built up by anionic polymerisation via corresponding epoxides or corresponding activated polyalkylene oxides or polyalkylene imines are condensed on or have an activated acid, aldehyde or vinyl group which can react with an OH group of the polysaccharide.

10. Process according to one of claims 7 to 9, **characterised in that** the sulphate ester groups are introduced by means of suitable sulphating agents, such as sulphuric acid, chlorosulphonic acid, sulphur trioxide, piperidine sulphuric acid, in the presence of Lewis bases, such as pyridine, triethylamine, dimethylaniline or adducts of these Lewis bases with sulphur trioxide.

11. Process according to claim 10, **characterised in that** the reaction is carried out in an inert solvent, especially toluene, formamide, dimethylformamide, dimethyl sulphoxide, pyridine or their mixtures.

12. Use of polysaccharide sulphates according to claims 1 to 7 as high performance flow agents for cement mixtures, **characterised in that** this agent is added to the cement mixture in an amount of 0.1 to 5%, referred to the amount of cement, preferably of 0.3 to 1%.

## Revendications

1. Sulfates de polysaccharide substitués en tant que plastifiants haute performance pour des mélanges de ciment, constitués par
a) une chaîne polysaccharidique ayant une masse moléculaire moyenne de 5.000 à 200.000, qui comprend
b) de 1 à 16 % de soufre sous forme de groupes sulfate-ester et
c) par rapport aux unités saccharide, de 0,01 à 1 chaîne latérale sous forme de groupes poly(oxyde d'alkylène) et/ou de groupes polyalkylènimine,
d) des groupes poly(oxyde d'alkylène) et/ou polyalkylènimine comprenant, en moyenne, de 5 à 300 groupes oxyde d'alkylène et/ou alkylènimine et
e) des groupes poly(oxyde d'alkylène) comprenant un groupe terminal hydroxy ou méthoxy et des groupes polyalkylènimine comprenant un groupe terminal amino ou alkylamino ayant 1-20 atomes de C.

2. Sulfates de polysaccharide selon la revendication 1, **caractérisés en ce que** la chaîne polysaccharidique présente une masse moléculaire de 10.000 à 150.000, de préférence de 20.000 à 120.000.

3. Sulfates de polysaccharide selon la revendication 1 ou 2, **caractérisés en ce que** la teneur en sulfate est de 5 à 10 %.

4. Sulfates de polysaccharide selon l'une quelconque des revendications 1 à 3, **caractérisés en ce que** le degré de substitution des chaînes de poly(oxyde d'alkylène) et/ou de polyalkylènimine est de 0,05 à 0,2.

5. Sulfates de polysaccharide selon l'une quelconque des revendications 1 à 4, **caractérisés en ce que** les chaînes de poly(oxyde d'alkylène) et/ou de polyalkylènimine présentent un degré de polymérisation de 10 à 50.

6. Sulfates de polysaccharide selon l'une quelconque des revendications 1 à 5, **caractérisés en ce qu'**au maximum 10 % des polysaccharides présentent une masse moléculaire <2.000 ou > 200.000.

7. Procédé de préparation de sulfates de polysaccharide selon l'une quelconque des revendications 1 à 6, **caractérisé en ce que**
a) on dégrade un polysaccharide naturel de manière connue en soi en un polysaccharide ayant une masse moléculaire moyenne de 20.000 à 200.000,
b) on effectue la substitution du polysaccharide avec un composé poly(oxyde d'alkylène) ou polyalkylènimine et
c) on effectue la sulfatation du polysaccharide de manière connue en soi, l'ordre dans lequel les étapes a) et b) sont effectuées pouvant être inversé.

8. Procédé selon la revendication 7, **caractérisé en ce que** l'on effectue la dégradation du polysaccharide naturel par hydrolyse acide dense en solution aqueuse ou aqueuse-alcoolique à l'aide d'un acide minéral, de préférence l'acide sulfurique ou l'acide nitrique.

9. Procédé selon la revendication 7 ou 8, **caractérisé en ce que** les chaînes latérales polyglycol ou polyalkylimine sont dégradées par polymérisation anionique en époxydes correspondants ou sont condensées avec des poly(oxyde d'alkylène) ou polyalkylènimines activés appropriés, ou comprennent un groupe acide, aldéhyde ou vinyle activé qui est capable de réagir avec un groupe OH du polysaccharide.

10. Procédé selon l'une quelconque des revendications 7 à 9, **caractérisé en ce que** les groupes sulfate-ester sont introduits au moyen d'agents de sulfatation appropriés tels que l'acide sulfurique, l'acide chlorosulfonique, l'anhydride sulfurique, l'acide pipéridinesulfurique, en présence de bases de Lewis telles que la pyridine, la triéthylamine, la diméthyléthylènamine, la triéthylamine, la diméthylaniline ou des produits d'addition des ces bases de Lewis avec l'anhydride sulfurique.

11. Procédé selon la revendication 10, **caractérisé en ce que** la réaction est effectuée dans un solvant inerte, notamment le toluène, le formamide, le diméthylformamide, le diméthylsulfoxyde, la pyridine ou des mélanges de ces composés.

12. Utilisation de sulfates de polysaccharide selon l'une quelconque des revendications 1 à 7 en tant que plastifiants haute performance pour des mélanges de ciment, **caractérisée en ce que** ces plastifiants sont ajoutés au mélange de ciment en une proportion de 0,1 à 5 %, de préférence de 0,3 à 1 % par rapport à la teneur en ciment.
